**Europäisches Patentamt**

**European Patent Office**

**Office européen des brevets**

(11) Veröffentlichungsnummer: **0 143 205**
**B1**

(12) **EUROPÄISCHE PATENTSCHRIFT**

(45) Veröffentlichungstag der Patentschrift:
02.11.88

(51) Int. Cl.⁴: **G 01 T  1/00,** G 01 T  1/20

(21) Anmeldenummer: **84110359.1**

(22) Anmeldetag: **31.08.84**

(54) Ortsauflösende, lichtempfindliche Diodenanordnung und Verfahren ihrer Herstellung.

(30) Priorität: 17.09.83 DE 3333738

(43) Veröffentlichungstag der Anmeldung:
05.06.85 Patentblatt 85/23

(45) Bekanntmachung des Hinweises auf die Patenterteilung:
02.11.88 Patentblatt 88/44

(84) Benannte Vertragsstaaten:
DE FR GB IT NL

(56) Entgegenhaltungen:
EP-A-0 031 732
FR-A-2 118 594
GB-A-907 116
US-A-3 936 645

IEEE TRANSACTIONS ON NUCLEAR SCIENCE,
Band NS-29, Nr. 1, Februar 1982, Seiten 402-404,
IEEE, New York, US; S.R. BORENSTEIN u.a.:
"Scintillating optical fibers for fine grained
hodoscopes"

(73) Patentinhaber: Sauerwein, Kurt, Dr., Bergische
Strasse 16, D-5657 Haan 1 (DE)

(72) Erfinder: Sauerwein, Kurt, Dr., Bergische Strasse
16, D-5657 Haan 1 (DE)
Erfinder: Link, Rainer, Dr., Buchenhöhe 1, D-5159
Kerpen- Horrem (DE)
Erfinder: Nuding, Wolfgang, Dr., Am Gerstenkamp
8, D-5210 Troisdorf (DE)

(74) Vertreter: Schumacher, Horst, Dr. Dipl.- Phys.,
Frühlingstrasse 43 (Ecke Holunderweg), D-4300
Essen 1 (DE)

## Beschreibung

Die Frfindung betrifft eine ortsauflösende, lichtempfindliche Diodenanordnung gemäß dem Oberbegriff von Patentanspruch 1 und 2 sowie ein Verfahren ihrer Herstellung gemäß Oberbegriff von Patentanspruch 6, 7 und 8.

Eine solche Diodenanordnung ist bekannt aus der US-A-3 936 645.

Beim direkten Nachweis von Röntgen- oder Gammastrahlen, die eine flächenhafte Intensitätsverteilung aufweisen, wie dies z. B. hinter einem durchstrahlten Objekt der Fall ist, können für diese Strahlungsart empfindliche Filme oder Fernsehaufnahmeröhren mit einer röntgenempfindlichen Kathode eine sehr hohe Ortsauflösung erreichen. Da die Röntgenfilme erst entwickelt werden müssen, werden aber die gewünschten Informationen erst relativ spät und dann auch nur in einzelnen Bildern erhalten, so daß eine fortlaufende Beobachtung nicht möglich ist und Veränderungen im Strahlungsbild nur sehr schwer wahrzunehmen sind. Fernsehaufnahmeröhren sind wiederum sehr raumaufwendig und erfordern den Umgang mit hohen elektrischen Spannungen.

Eine fortlaufende Beobachtung von Strahlungsbildern ohne hohen apparativen Aufwand ist mittels lichtempfindlicher Halbleiterbildsensoren mit aufgebrachter Phosphoreszenzschicht möglich geworden, bei denen eine lichtempfindliche Diodenanordnung die Intensitätsverteilung eines Strahlungsbildes, das mit Hilfe der Phosphoreszenzschicht in ein optisches Bild transferriert wurde, unmittelbar in Bildpunkte verwandelt, denen bestimmte elektrische Ladungen zugeordnet sind und die auf einfache Weise abgefragt, dargestellt und gespeichert werden können. Solche ortsauflösenden, lichtempfindlichen Diodenanordnungen sind z. B. unter der Bezeichnung CCD (charge-coppled-devices) bekanntgeworden.

Bei ihnen ist eine Vielzahl von Fotodioden entlang einer Linie oder auf eine rechteckige Fläche dicht verteilt. Derzeit übliche Ortsauflösungen liegen bei 500 x 380 Bildpunkten für eine Matrixanordnung und zwischen 256 und 4 096 Bildpunkten für eine zeilenförmige Anordnung. Die Größe der von den einzelnen Fotodioden bei der Belichtung erzeugten elektrischen Ladung ist ein unmittelbares Maß für Helligkeit des einfallenden Lichtes und kann durch geeignete elektronische Schaltungen in ein Videosignal verwandelt werden. Da solche Fotodioden aber in der Regel nur auf die Wellenlängenbereiche etwa des sichtbaren Lichtes reagieren, wird auf das zum Schutze der Dioden erforderliche Eingangsfenster eine Phosphorschicht aufgebracht, in der einfallende Röntgenstrahlen ein sichtbares Licht erzeugen, das dann in den Fotodioden die elektrischen Ladungen erzeugt. Um im Glas des Eingangsfensters keine Ortsauflösung zu verlieren, ist bei solchen Diodenanordnungen statt des Glases auch ein Eingangsschirm verwendet worden, der die Eigenschaften einer Fiberglasoptik aufweist. Hierdurch können die in der Phosphorschicht erzeugten Lichtquanten durch mehrfache Totalreflektion in den einzelnen Glasfasern nicht in benachbarte Flächenelemente der Diodenanordnung hineinstrahlen. Eine derartige bekannte Diodenanordnung kann Röntgenstrahlungen von 10 bis 75 keV bei einer Ortsauflösung von 0,1 mm nachweisen. Der Nachweis höherer Energien würde eine größere Dicke der Phosphorschicht erfordern, was wiederum die Ortsauflösung der Diodenanordnung verschlechtern würde.

Aus der US-A-3 936 645 ist es bekannt, bei ortsauflösenden, lichtempfindlichen Diodenanordnungen der eingangs genannten Art, einen Eingangsschirm zu verwenden, der nicht nur die Eigenschaft zum räumlich differenzierten, gerichteten Weiterleiten von Licht (fiberglasoptische Eigenschaften) aufweist, sondern der zudem aus Szintillatoren besteht, die die Röntgen- oder Gammastrahlen in ein Licht umwandeln, für das die Diodenanordnung empfindlich ist. Um bei dieser bekannten Diodenanordnung die gewünschten fiberglasoptischen Eigenschaften zu erzielen, ist es erforderlich, eine Schicht aus einem fluoreszierenden oder lumineszierenden Material mittels Laserstrahl in der x- und y-Koordinate zeilenweise aufzutrennen und die dabei entstehenden schmalen Schlitze mit einem lichtundurchlässigen Material zu füllen. Oder aber es ist erforderlich, nach dem Zerschneiden eines lumineszierender Schichtmaterials die Schnittflächen so zu beschichten, daß sie totalreflektierende Eigenschaften aufweisen, und nachfolgend die Streifen wieder zusammenzufügen. All diese Herstellungsverfahren sind sehr aufwendig.

Aus der GB-A-2 030 422 ist es bekannt, Strahlendetektoren aus Szintillatorkristallen mit dahinter angeordneten Fotodiodenzuversehen und jeden einzelnen Detektor einem eigenen Kollimatorbereich zuzuordnen. Bei diesen bekannten Detektoren werden demnach keine "fiberglasoptischen" Eigenschaften gefordert und realisiert, da die Kollimatorplatten dafür sorgen, daß die von einer Flächeneinheit eines Strahlenauffangschirmes empfangene Ionisationsstrahlen sich nur auf jeweils einen einzigen Detektor auswirken. Mit derartigen Kollimatoranordnungen ist eine zufriedenstellende Ortsauflösung nicht möglich; zudem sind Kollimatoranordnungen noch aufwendiger als die aus der US-PS-3 936 645 bekannten Diodenanordnungen.

Aus IEEE Transactions on Nuclear Science, Bd. NS 29, Nr. 1., Febr. 1982, Seiten 402 bis 404 ist ein sogenanntes Hodoscope bekannt, bei dem mehrere in einer oder in zwei benachbarten Reihen angeordnete Szintillationsfasern mit einem ihrer Stirnenden einem Fotodetektor zugeordnet sind. Dieses Hodoscope besteht als Nachweisgerät für energiereiche Teilchen aus einer Anzahl von in einer Reihe nebeneinander angeordneten Vorrichtungen, die den <u>Durchgang</u> eines Teilchens anzeigen. Die Teilchenflugbahn erstreckt sich dabei im wesentlichen <u>quer</u> zur Szintillationsfaser, deren Durchmesser etwa 1 mm und deren Länge z. B. 15 bis über 60 cm beträgt, damit ein Beobachtungsfenster ausreichender Querschnittsfläche zur Verfügung steht. Bei dieser bekannten Anordnung kommt der Ortsauflösung allenfalls eine untergeordnete Bedeutung zu. Wegen des quer zur Szintillationsfaserrichtung angeordneten Durchtrittsfensters für die nachzuweisenden Ereignisse kommt eine derartige Anordnung für den Nachweis der Intensitätsverteilung von Röntgen- oder Gammastrahlen nicht in Betracht.

Aus der FR-A-2 118 594 ist ein Röhrenbildverstärker bekannt, bei dem die einen Eingangsschirm bildenden Szintillationskristalle und Lichtleiter mit seitlichem Abstand voneinander getrennt angeordnet sind. Auch wenn keine Lichtleiter verwendet werden, müssen die Querschnitte der Szintillationskristalle so klein sein, daß sie seitlich von einer Lufthülle umgeben sind. Oder aber die Szintillationskristalle sind seitlich von Wänden umschlossen. Hierbei handelt es sich also um eine Anordnung, wie sie auch bereits aus der US-PS-3 936 645 bekannt ist.

Aus der EP-A-31 732 ist ein Lichtverstärker bekannt, bei dem der Eingangsschirm einer CCD-Anordnung aus einer Szintillatorschicht zur Erzeugung von Fotoelektronen besteht, welche nachfolgend zum Zwecke der Lichtverstärkung beschleunigt und von der CCD-Anordnung nachgewiesen werden. Für höherenergetische Gamma- oder Röntgenstrahlen ist diese bekannte Anordnung ungeeignet, weil, wie weiter oben bereits erörtert, hierfür eine vergleichsweise dicke Szintillatorschicht erforderlich wäre, welche die Ortsauflösung spürbar verschlechtern würde.

Aus der GB-A-907 116 ist es bekannt, als Frontglas einer Kathodenstrahlröhre zunächst eine Schicht parallel angeordneter lichtleitender Fasern zu verwenden, hinter denen eine Zellenstruktur angeordnet ist, wobei die Zellen mit phosphoreszierendem Material gefüllt sind.

Der Erfindung liegt die Aufgabe zugrunde, eine verbesserte und vereinfacht herzustellende Diodenanordnung der eingangs genannten Art sowie ein Verfahren ihrer Herstellung zu schaffen; insbesondere sollen damit Röntgen- oder Gammastrahlen auch mit höheren als den bisher bekannten Energien, insbesondere bis über 1 MeV, mit derselben guten Ortsauflösung nachgewiesen werden können, wie sie bei den bekannten Diodenanordnungen für den Wellenlängenbereich des sichtbaren Lichtes möglich ist. Der Eingangsschirm der Diodenanordnung soll gleichzeitig zwei Bedingungen erfüllen, nämlich die einfallende Strahlung in ein von der Diodenanordnung nachweisbares Licht umwandeln sowie das Strahlungsbild punktförmig auf die Diodenanordnung übertragen.

Als technische Lösung wird hierfür eine Diodenanordnung der eingangs genannten Art mit den kennzeichnenden Merkmalen von Patentanspruch 1 bzw. - alternativ - Patentanspruch 2 vorgeschlagen; hinsichtlich eines Herstellungsverfahrens der eingangs genannten Art werden die in den Patentansprüchen 6, 7 oder 8 gekennzeichneten Merkmalskombinationen zur Lösung der vorerwähnten Aufgabe vorgeschlagen.

Die Erfindung basiert demnach auf dem Grundgedanken, für die Diodenanordnung der eingangs genannten Art Szintillatorkristalle in Form lichtleitender Fasern herzustellen und im wesentlichen gleichlange Stücke solcher Fasern parallel zueinander anzuordnen, so daß ein Faserbündel entsteht, welches als Eingangsschirm der Diodenanordnung fungiert.

Eine erfindungsgemäß ausgebildete Diodenanordnung hat den Vorteil, daß der Eingangsschirm im wesentlichen in einem einzigen Verfahrensschritt herstellbar ist, da die verwendeten Szintillatorkristalle ohne besondere Bearbeitung ihrer Oberflächen die erwünschte lichtleitende Eigenschaft, also die Eigenschaft zum räumlich differenzierten, gerichteten Weiterleiten von Licht, aufweisen. Es wurde aber überraschenderweise gefunden, daß selbst zum Nachweis hochenergetischer Gamma- und Röntgenstrahlen geeignete Dicken der Szintillatoren ohne negativen Einfluß auf das Auflösungsvermögen der Diodenanordnung bleibt, wenn eine Vielzahl von dicht nebeneinander angeordneten Szintillatoren verwendet wird, die die erfindungsgemäßen Merkmale aufweisen.

Als Szintillatoren sind grundsätzlich alle szintillierenden Substanzen geeignet, aus denen sich eine Fiberglasoptik herstellen läßt. Typische Szintillatorsubstanzen sind aktivierte, z. B. mit Thallium aktivierte Kristalle aus Natrium-, Kalium- oder Caesiumjodid, aber auch mit Europium aktiviertes Lithiumjodid oder silberaktiviertes Zinksulfid. Bevorzugt besteht die Fiberglasoptik des Eingangsschirmes aus einem Szintillatorglas. Ein typischerweise erfindungsgemäß verwendbares Szintillatorglas ist in der am 22.12. 83 publizierten DE-A-3 222 567 beschrieben worden. Glasfasern aus z. B. einem solchen Szintillatorglas sind, z.B. in der Form eines als Eingangsschirm dienenden Glasfaserbündels, erfindungsgemäß verwendbar.

Grundsätzlich ist es möglich, den erfindungsgemäßen Eingangsschirm zugleich als Schutzschicht für die Diodenanordnung zu verwenden. Dies kann z. B. dadurch geschehen, daß der Eingangsschirm unmittelbar auf die Diodenanordnung aufgedampft wird. Hierbei wird die geforderte fiberglasoptische Eigenschaft des Eingangsschirmes erfindungsgemäß insbesondere dadurch erreicht, daß man auf der Diodenanordnung Szintillatorkristallnadeln wachsen läßt, die zueinander parallel und in Normalen-Richtung bezüglich der Ebene der Diodenanordnung ausgerichtet sind. Auf diese Weise stellt jede einzelne Szintillatorkristallnadel eine Glasfiber dar, aus der das in ihr erzeugte und von der Diodenanordnung nachweisbare Licht nur an den Stirnflächen austreten kann. Dabei wird eine besonders gute Ortsauflösung erreicht, wenn die Dichte der Kristallnadeln der Dichte der Diodenverteilung entspricht.

Als weitere Herstellungsarten der Szintillationskristalle mit fiberglasoptischen Eigenschaften kommt erfindungsgemäß das Einkristallisieren in entsprechendes Gitter in Betracht. Hierzu wird eine an sich bekannte Kanalplatte z. B. streifenförmig abgeschnitten. Auf diese Art erhält man ein Gerüst aus ca. 20 - 30 µm großen Einzelelementen, die durch 5 - 10 µm breite Stege getrennt sind. Durch Eindampfen aus der Lösung oder Einschmelzen des Szintillationsmaterials in die Einzelelemente entsteht eine Kristallanordnung mit den Abmessungen der Kanalplatte, deren Einzelkristalle lichtleitende Eigenschaften besitzen. Die Gesamtanordnung wirkt wie eine Fiberglasoptik.

Die Größe der Eingangsschirme richtet sich nach der lichtempfindlichen Fläche des Sensors. Im Falle einer CCD-Anordnung wird es sich um einen Streifen von 2 bis 3 cm Länge und 2 bis 3 mm Breite handeln. Handelsübliche Kanalplatten sind aus Glas gefertigt. Die Poren haben einen Durchmesser von ca. 20 µm und machen 60 % der Gesamtfläche aus. Die Platten können in Dicken ab ca. 0,5 mm aufwärts gefertigt werden.

Unter "Fiberglasoptik" bzw. "fiberglasoptischen Eigenschaften" - im Sinne der Erfindung - wird folgendes verstanden:

Macht man einen Lichtleitstab sehr dünn, so kommt man zu einem fadenförmigen Gebilde (Fiber), das sich bequem aufspulen läßt. Eine solche Spule großen Durchmessers und von angemessener Dicke wird an einer Stelle durchgeschnitten.

Man erhält ein biegsames Bündel, dessen Schnittflächen einander genau entsprechen. Entwirft man auf der einen Endfläche ein Bild, so wird jedes Bildelement in seiner Beleuchtungsstärke auf das andere Ende übertragen. Berührungen der Fäden innerhalb der Spule, wobei die Totalreflexion aufgehoben ist, sind nicht von so starkem Einfluß, wie man es zunächst erwarten sollte. Um aber auch diese Verluste zu unterdrücken, umgibt man den Faden mit einem Material geringeren Brechwertes, so daß die Totalreflexion an der Grenze zwischen Seele und Haut erfolgt. Die Fadenstärke liegt bei wenigen 1/1000 mm. Dadurch bleibt die Rasterung für die meisten Verwendungszwecke unmerklich.

Gemäß einer Weiterbildung der Erfindung ist es aber auch möglich, zwischen dem erfindungsgemäßen Eingangsschirm und der Diodenanordnung eine zusätzliche Fiberglasoptik anzuordnen, die - ebenso wie bei den bekannten Diodenanordnungen - lediglich das auf ihrer Eingangsseite, also von der Rückseite des Eingangsschirmes her, einfallende, von der Diodenanordnung nachweisbare Licht der Diodenanordnung zuführt und somit lediglich als Übertragungselement dient, das die Diodenanordnung schützt. In diesem Falle sind also zwei Schichten mit fiberglasoptischen Eigenschaften vorgesehen, von denen die strahlungsseitige aus einer Vielzahl von Szintillatoren besteht.

Mit der erfindungsgemäßen Diodenanordnung läßt sich ein Abbildungssystem für Strahlungsbilder schaffen, das auch mit hoher Energie, z. B. bis 1 MeV - aber auch mehr - betrieben werden kann. Ein zeilenförmiges CCD-Element mit 1 024 Elementen besitzt z. B. eine Länge von nur 2,5 cm, so daß man damit ein Radioskopiesystem sehr geringer Abmessungen bauen kann. Ein solches System ist u.a. zur Prüfung kleiner Bauteile geeignet und kann auch entlang einer Schweißnaht geführt werden. Die so erzeugten Durchstrahlungsaufnahmen besitzen eine Aufnahmequalität, die dem Röntgenfilm mindestens gleichwertig ist, im Gegensatz hierzu jedoch schneller und automatisierbar sind. Zur Aufzeichnung der Durchstrahlungsbilder muß das Aufnahmesystem mit einer an sich bekannten elektronischen Einheit verbunden werden, die das zeilenförmige Bild in einem Bildwiederholspeicher oder dgl. zu einem flächenhaften Bild aufbaut und die Betrachtung auf einem Monitor erlaubt.

Weitere Einzelheiten, Merkmale und Vorteile des Gegenstandes der Erfindung ergeben sich aus den abhängigen Patentansprüchen sowie sind in der nachfolgenden Beschreibung der zugehörigen Zeichnung, in der bevorzugte Ausführungsformen einer erfindungsgemäßen Diodenanordnung dargestellt worden sind, erläutert. In der Zeichnung zeigen:

Fig. 1 eine Diodenanordnung in seitlicher Ansicht;

Fig. 2 eine andere Diodenanordnung in seitlicher Ansicht sowie

Fig. 3 eine andere Diodenanordnung mit einer Kanalplatte als Eingangsschirm in perspektivischer Darstellung.

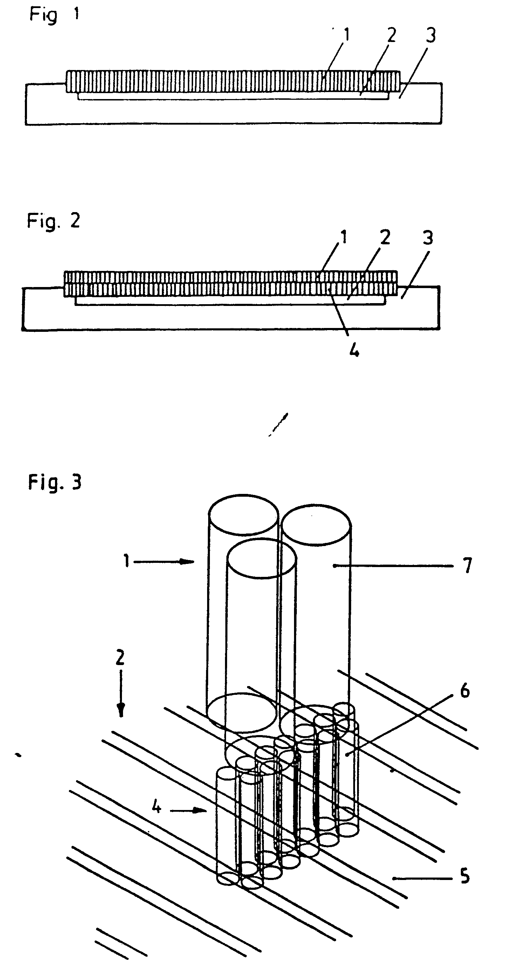

Gemäß Fig. 1 besteht ein Eingangsschirm 1 aus einer Vielzahl von Szintillatoren, die parallel und in Normalen-Richtung zu der sich darunter befindenden Schicht der lichtempfindlichen, ortsauflösenden Diodenanordnung 2 ausgerichtet sind. Die gesamte Anordnung ist auf einen Träger 3 aufgebracht, der mit in der Zeichnung nicht eigens dargestellten elektrischen Anschlüssen für eine an sich bekannte Auswertelektronik versehen ist.

Gemäß Fig. 2 kann zwischen dem Eingangsschirm 1 und der Diodenanordnung 2 eine zusätzliche Fiberglasoptik 4 vorgesehen sein, bei der die Glasfibern ebenfalls parallel und in Normalen-Richtung zur Fläche der Diodenanordnung ausgerichtet sind.

Fig. 3 zeigt die Anordnung für den Fall einer mit z. B. CsJ (T1) oder auch einer szintillierenden Glassorte gefüllten Kanalplatte. Die lichtempfindlichen Zonen 5 des CCD (Diodenanordnung) 2 sind durch ein aus Glasfasern 6 zusammengesetztes Deckglas (zusätzliche Fiberglasoptik) 4 abgedeckt. Darauf ist wiederum eine mit Szintillationsmaterial gefüllte Kanalplatte gesetzt. In den Löchern der Kanalplatte befindet sich der faserförmige Szintillator 7, der vom Material der Kanalplatte umhüllt wird (hier nicht gesondert eingezeichnet) und mit der Kanalplatte den Eingangsschirm 1 bildet.

**Patentansprüche**

1. Ortsauflösende, lichtempfindliche Diodenanordnung (2) mit in einer Ebene angeordneten Dioden zum unmittelbaren Nachweisen der Intensitätsverteilung von Röntgen- oder Gammastrahlen mit einem davor angeordneten Eingangsschirm (1), der die Eigenschaft zum räumlich differenzierten, gerichteten Weiterleiten von Licht aufweist und der aus einer Vielzahl von parallel zueinander und in Normalen-Richtung zu der Diodenanordnung sich erstreckenden Szintillatorkristallen besteht, die die Röntgen- oder Gammastrahlen in ein Licht umwandeln, für das die Diodenanordnung empfindlich ist, dadurch gekennzeichnet, daß die Szintillatorkristalle des Eingangsschirmes (1) aus dicht nebeneinander angeordneten, aus einem Bündel von dicht nebeneinander angeordneten Fibern geschnittenen, in Fiberlängsrichtung lichtleitenden Körpern (7) bestehen und eine Fiberglasoptik in der Weise bilden, daß die Schnittflächen der Körper (7) zwei Endflächen bilden, so daß jedes Bildelement eines auf der einen Endfläche entworfenen Bildes auf das andere Ende übertragen wird.

2. Ortsauflösende, lichtempfindliche Diodenanordnung (2) mit in einer Ebene angeordneten Dioden zum unmittelbaren Nachweise der Intensitätsverteilung von Röntgen- oder Gammastrahlen mit einem davor angeordneten Eingangsschirm (1), der die Eigenschaft zum räumlich differenzierten, gerichteten Weiterleiten von Licht aufweist und der aus einer Vielzahl von parallel zueinander und in Normalen-Richtung zu der Diodenanordnung sich erstreckenden Szintillatorkristallen besteht, die die Röntgen- oder Gammastrahlen in ein Licht umwandeln, für das die Diodenanordnung empfindlich ist, dadurch gekennzeichnet, daß die Szintillatorkristalle des Eingangsschirmes (1) aus dicht nebeneinander angeordneten, zueinander parallel und in Normalen-Richtung bezüglich der Ebene der Diodenanordnung ausgerichteten und so in Faserform auf einer Unterlage gewachsenen Kristallnadeln bestehen, und eine Fiberglasoptik in der Weise bilden, daß die Stirnflächen der Kristallnadeln zwei Endflächen bilden, so daß jedes Bildelement eines auf der einen Endfläche entworfenen Bildes auf das andere Ende übertragen wird.

3. Diodenanordnung nach Anspruch 2, dadurch gekennzeichnet daß sich die einzelnen Szintillatorkristalle innerhalb von Durchbrechungen einer fein durchbrochenen Kanalplatte erstrecken.

4. Diodenanordnung nach Anspruch 3, dadurch gekennzeichnet, daß die Kanalplatte aus einem Gerüst aus 20 - 30 µm großen, durch 5 - 10 µm breite Stege getrennten Einzelelementen besteht.

5. Diodenanordnung nach einem der Ansprüche 1 bis 4, dadurch gekennzeichnet, daß zwischen dem Eingangsschirm und der Diodenanordnung eine zusätzliche Fiberglasoptik (4) zur räumlich differenzierten, gerichteten Weiterleitung von Licht angeordnet ist.

6. Verfahren zum Herstellen einer Diodenanordnung nach Anspruch 1, dadurch gekennzeichnet, daß eine Fiber aus Szintillatormaterial durch Wickeln zu einer Spule großen Durchmessers aufgespult wird und die Spule durchschnitten wird, so daß eine Fiberglasoptik entsteht, bei der die Schnittflächen zwei Endflächen bilden, so daß jedes Bildelement eines auf der einen Endfläche entworfenen Bildes auf das andere Ende übertragen wird.

7. Verfahren zum Herstellen einer Diodenanordnung nach Anspruch 2 oder 5, dadurch gekennzeichnet, daß im Vakuum auf eine CCD-Anordnung bzw. auf eine darauf befindliche Fiberglasoptik (4), Szintillatormaterial aufgedampft wird, das nadelförmig senkrecht zur Diodenebene auskristallisiert, so daß eine Fiberglasoptik entsteht, bei der die Stirnflächen der Kristallnadeln zwei Endflächen bilden, so daß jedes Bildelement eines auf der einen Endfläche entworfenen Bildes auf das andere Ende übertragen wird.

8. Verfahren zum Herstellen einer Diodenanordnung nach Anspruch 3, dadurch gekennzeichnet, daß die einzelnen Szintillatorkristalle in die Durchbrechungen einer fein durchbrochenen Kanalplatte einkristallisiert werden, so daß zur Diodenebene senkrechte, nadelförmige Szintillatorkristalle entstehen, die eine Fiberglasoptik bilden, bei der die Stirnflächen der Kanalplatte zwei Endflächen bilden, so daß jedes Bildelement eines auf der einen Endfläche entworfenen Bildes auf das andere Ende übertragen wird.

**Claims**

1. A locally resolving, light-sensitive diode arrangement (2) having diodes arranged in one plane for directly detecting the intensity distribution of X-rays or gamma rays with an input screen (1), which is arranged in front of the diodes and which has the property of further conducting light in a spatially differentiated, directed manner and which is formed from a plurality or scintillator crystals which extend parallel to one another in the direction of the normal to the diode arrangement and which convert the X-rays or gamma rays into light, to which the diode arrangement is sensitive, characterised in that the scintillator crystals of the input screen (1) are formed by bodies (7) which are arranged close together, which are cut from a bundle of fibres arranged close together, which conduct light in the longitudinal direction of the fibres and which form a glass fibre optical system, such that the cut surfaces of the bodies (7) form two end faces, so that each image element of an image formed on one end face is transmitted to the other end.

2. A locally resolving, light-sensitive diode arrangement (2) having diodes arranged in one plane for directly detecting the intensity distribution of X-rays or gamma rays with an input screen (1), which is arranged in front of the diodes and which has the property of further conducting light of a spatially differentiated, directed manner and which is formed from a plurality of scintillator crystals which extend parallel to one another in the direction of the normal to the diode arrangement and which convert the X-rays or gamma rays into light, to which the diode arrangement is sensitive, characterised in that the scintillator crystals of the input screen (1) are formed by crystal needles which are arranged close together and parallel to one another, which extend in the direction of the normal to the plane of the diode arrangement, which are grown in this manner in fibre form on a base, and which form a glass fibre optical system, such that the end surfaces of the crystal needles form two end faces, so that each image element of an image formed on one end face is transmitted to the other end.

3. A diode arrangement according to claim 2, characterised in that the individual scintillator crystals extend within openings in a finely perforated canal plate.

4. A diode arrangement according to claim 3, characterised in that the canal plate is formed from a framework of 20 - 30 µm-large individual elements which are separated by webs which are 5 - 10 µm wide.

5. A diode arrangement according to any one of claims 1 to 4, characterised in that an additional glass fibre optical system (4) for further conveying light in a spatially differentiated, directed manner is arranged between the input screen and the diode arrangement.

6. A method for producing a diode arrangement according to claim 1, characterised in that a fibre of scintillator material is coiled by winding to form a coil having a large diameter and the coil is cut so as to produce a glass fibre optical system, in which the cut surfaces form two end faces, so that each image element of an image formed on one end face is transmitted to the other end.

7. A method for producing a diode arrangement according to claim 2 or 5, characterised in that scintillator material is evaporated under vacuum onto a CCD arrangement or onto a glass fibre optical system (4) arranged thereon, which scintillator material crystallises out in the shape of needles extending vertically relative to the plane of the diodes, so that a glass fibre optical system is produced in which the end surfaces of the crystal needles form two end faces, so that each image element of an image formed on one end face is transmitted to the other end.

8. A method for producing a diode arrangement according to claim 3, characterised in that the individual scintillator crystals are crystallised into the openings in a finely perforated canal plate, so that needle-shaped scintillator crystals are formed which extend vertical relative to the plane of the diodes and which form a glass fibre optical system in which the end surfaces of the canal plate form two end faces, so that each image element of an image formed on one end face is transmitted to the other end.

**Revendications**

1. Dispositif à diodes (2) photosensible de résolution spatiale, comportant des diodes disposées dans un plan pour la détection directe de la distribution de l'intensité de rayons X ou gamma comportant un écran d'entrée (1) placé devant qui a pour caractéristique de transmettre la lumière de manière dirigée et différenciée dans l'espace et qui est constitué d'une pluralité de cristaux de scintillateur parallèles entre eux et s'étendant perpendiculairement au dispositif à diodes, lesquels transforment les rayons X ou gamma en une lumière à laquelle le dispositif à diodes est sensible, caractérisé en ce que les cristaux de scintillateur de l'écran d'entrée (1) sont constitués de corps (7) disposés côte à côte, coupés dans un faisceau de fibres disposées côte à côte, conducteurs optiques dans la direction longitudinale des fibres, et constituent un dispositif optique à fibres de verre de telle sorte que les surfaces de coupe des corps (7) forment deux surfaces terminales telles que chaque élément d'une image projetée sur une surface terminale est transmis à l'autre extrémité.

2. Dispositif à diodes (2) photosensible de résolution spatiale, comportant des diodes disposées dans un plan pour la détection directe de la distribution de l'intensité de rayons X ou gamma comportant un écran d'entrée (1) placé devant qui a pour caractéristique de transmettre la lumière de manière dirigée et différenciée dans l'espace et qui est constitué d'une pluralité de cristaux de scintillateur parallèles entre eux et s'étendant perpendiculairement au dispositif à diodes, lesquels transforment les rayons X ou gamma en une lumière à laquelle le dispositif à diodes est sensible, caractérisé en ce que les cristaux de scintillateur de l'écran d'entrée (1) sont constitués d'aiguilles de cristaux disposées côte à côte de manière très rapprochée, parallèles entre elles et perpendiculaires au plan du dispositif à diodes, et qui se sont développée sous la forme de fibres sur un support et forment un dispositif optique à fibres de verre tel que les faces frontales des aiguilles de cristaux forment deux surfaces terminales, de manière que chaque élément d'une image projetée sur l'une des surfaces terminales est transmis à l'autre extrémité.

3. Dispositif à diodes selon la revendication 2, caractérisé en ce que les différents cristaux de scintillateur s'étendent à l'intérieur d'ajours pratiqués dans une plaque de canal finement perforée.

4. Dispositif à diodes selon la revendication 3, caractérisé en ce que la plaque de canal est constituée d'une structure faite d'éléments isolés de 20 à 30 µm, séparés par des traverses de 5 à 10 µm de largeur.

5. Dispositif à diodes selon l'une des revendications 1 à 4, caractérisé en ce qu'un dispositif optique à fibres de verre supplémentaire (4) est disposé entre l'écran d'entrée et le dispositif à diodes pour la transmission de lumière, dirigée, différenciée dans l'espace.

6. Procédé de fabrication d'un dispositif à diodes selon la revendication 1, caractérisé en ce qu'une fibre d'une matière de scintillateur est enroulée pour former une bobine de grand diamètre et en ce que la bobine est coupée de manière à obtenir un dispositif optique à fibres de verre dans lequel les surfaces de coupe forment deux surfaces terminales telles que chaque élément d'une image projetée sur l'une des surfaces terminales est transmis à l'autre extrémité.

7. Procédé de fabrication d'un dispositif à diodes selon la revendication 2 ou 5, caractérisé en ce qu'une matière de scintillateur est vaporisée sous vide sur un dispositif CCD ou sur un dispositif optique à fibres de verre (4) se trouvant dessus, laquelle matière se cristallise sous forme d'aiguilles perpendiculairement au plan des diodes, de sorte qu'il se forme un dispositif optique à fibres de verre dans lequel les surfaces frontales des aiguilles des cristaux forment deux surfaces terminales telles que chaque élément projeté sur l'une des surfaces terminales est transmis à l'autre extrémité.

8. Procédé de fabrication d'un dispositif à diodes selon la revendication 3, caractérisé en ce que les différents cristaux scintillateurs sont cristallisés dans les ajours d'une plaque de canal finement perforée, de façon telle qu'il se forme des cristaux de scintillateur en forme d'aiguilles, perpendiculaires au plan des diodes, lesquels cristaux forment un dispositif optique à fibres de verre dans lequel les surfaces frontales de la plaque de canal forment deux surfaces terminales telles que chaque élément d'une image projetée sur l'une des surfaces terminales est transmis à l'autre extrémité.

Fig 1

Fig. 2

Fig. 3

1